# EUROPEAN PATENT SPECIFICATION

(11) **EP 2 631 022 B1**
(45) Date of publication and mention of the grant of the patent: **11.06.2014**
(21) Application number: 13155368.7
(22) Date of filing: 15.02.2013
(51) Int. Cl.: B21J 15/02, B21J 15/36, B21J 15/28

(54) **Die for self-piercing rivet fastening device**
Matrize für eine Vorrichtung zum Setzen von Stanznieten
Matrice pour dispositif de fixation de rivets autoperforants

(30) Priority: 21.02.2012 JP 2012034785
(43) Date of publication of application: 28.08.2013
(73) Proprietor: Newfrey LLC, Newark, Delaware 19711 (US)
(72) Inventor: Makino, Takanori, Toyohashi-shi, Aichi 441-8540 (JP); Sakoda, Kanji, Toyohashi-shi, Aichi 441-8540 (JP); Imaizumi, Hiroshi, Toyohashi-shi, Aichi 441-8540 (JP)
(74) Representative: Haar, Lucas Heinz Jörn

(56) References cited:
- WO-A1-92/14566
- DE-B3-102006 028 537

## Description

The present invention relates to a die used by a self-piercing rivet fastening device to fasten a plurality of members to be fastened (fastened members) using a self-piercing rivet having a large-diameter head portion and hollow leg portions extending from the head portion. The present invention relates more specifically to a die used to fasten members made of a material with low malleability, such as a die-cast material.

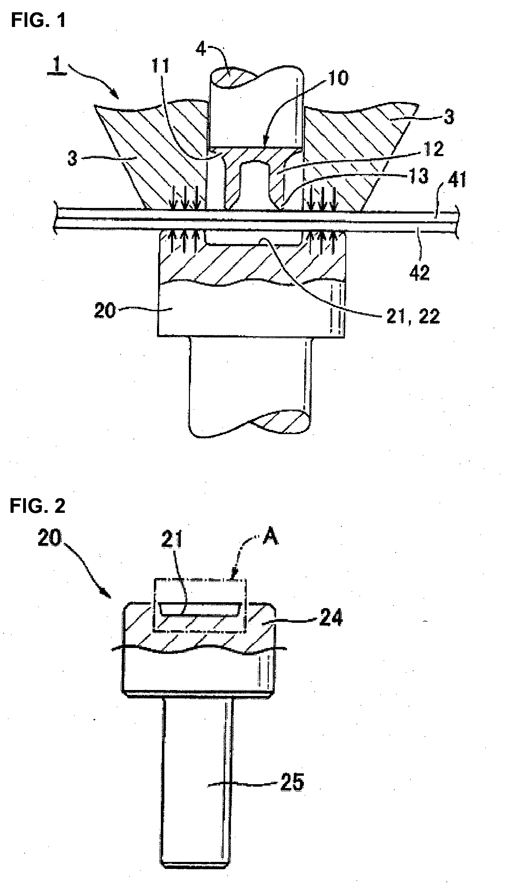

A self-piercing rivet is able to join members simply by driving the rivet into the fastened members, even when a hole has not been formed in the members beforehand such as a hole for a bolt. FIG. 1 is an enlarged view of the self-piercing rivet fastening portion of a self-piercing rivet fastening device of the prior art. The self-piercing rivet fastening device 1 clamps two fastened members 41, 42 with great force using a die 20 and a nose 3. A self-piercing rivet 10 has a large-diameter head portion 11 and hollow cylindrical leg portions 12 extending down from the head portion 11.

The die 20 has a cavity 21 in the upper surface, and the bottom surface 22 of the cavity is substantially flat. A self-piercing rivet 10 is driven by a punch 4 into the fastened members 41, 42 placed on top of the die 20. The tips 13 of the leg portions 12 of the self-piercing rivet 10 pierce the fastened member 41 on the punch side adjacent to the punch 4, and do not pierce the fastened member 42 on the receiving side adjacent to the die 20 but remain inside the member 42. The tips 13 of the leg portions 12 of the self-piercing rivet 10 are deformed by the die 20 so as to expand outward radially. The fastened members 41, 42 are then connected to each other by the head portion 11 and the leg portions 12 opened inside the fastened member 42. In FIG. 1, the bottom surface 22 of the cavity 21 is formed so as to be substantially flat. However, a protruding portion with a different shape is also provided which protrudes from the center of the cavity 21 towards the punch.

This type of self-piercing rivet is suitable for joining aluminum body panels that are unsuitable for welding. As the bodies of automobiles get lighter, the demand for self-piercing rivets has increased along with the greater demand for aluminum body panels. Because a punched self-piercing rivet pierces the upper fastened member 41 on the punch-side, but remains inside and does not pierce the lower fastened member 42 on the receiving-side adjacent to the die 20, there is no rivet puncture hole in the surface of the fastened member 42 on the receiving side. As a result, the sealing properties of the receiving-side fastened member 42 are not compromised, and its external appearance is not marred.

When fastened members 41, 42 with low ductility such as die-cast materials are fastened with a self-piercing rivet fastening device using a die 20 of the prior art, the tips of the leg portions 12 of the self-piercing rivet 10 driven in by the punch are pushed into pierced holes in the fastened members 41, 42, which are deformed by the cavity 21 in the die 20. If the plastic deformation is not resisted by the fastened members 41, 42, the members can crack. The fastened member 42 on the bottom side is more likely to crack.

JP 2006007266 A discloses a method for joining members with low ductility using a self-piercing rivet, wherein the joined members are heated near the spot where the self-piercing rivet is to be punched into the members. This can prevent cracking due to riveting, even in joined members with low ductility. However, the joining method in JP 2006007266 A requires a heating device to heat the joined members, and the joining process takes more time because the joined members have to be heated.

A self-piercing rivet can join members together without having to form holes in the fastened members. However, when fastened members with low malleability created by using die casting are fastened with a self-piercing rivet, the lower fastened member is likely to become cracked. The joining method for a self-piercing rivet disclosed in JP 2006007266 A is less likely to cause cracking in the fastened members, but requires an additional operation in the fastening process, and complicates what otherwise would be a simple fastening process. Thus, a self-piercing rivet fastening device and a fastening method are desired which prevent cracking when fastened members with low malleability are fastened using a self-piercing rivet.

DE 10 2006 028 537 B3, on which the preamble of claim 1 is based, discloses a die for a self-piercing rivet fastening device, which die is configured so that a punch can drive a self-piercing rivet having a large-diameter head portion and hollow leg portions extending from the head portion into a fastened member placed on top of the die. The die comprises a cavity formed in an upper surface of the die to receive a portion of the fastened member protruding due to the self-piercing rivet having been driven into the fastened member by the punch. The cavity is axially symmetrical relative to the central axis of the die, and has a flat or convex round surface in the central portion of the cavity and a protruding surface between the round surface and the edge portion of the cavity. The protruding surface includes a cylindrical surface surrounding the central portion and ending at an upper edge, which is surrounded by a circular flat surface.

The applicant has filed European Patent EP-A1-2 606 993 (referred to below as the previous patent application). As disclosed in this application, the deformation of fastened members can be minimized and cracking of the fastened members can be reduced by using a cavity in the die which is shallow and by giving the cavity a single radius shaped concave spherical surface.

However, when the lower fastened member is made of a material with low malleability, a significant amount of stress is applied to the lower fastened member by the leg portions of the self-piercing rivet immediately after piercing the upper fastened member, and this could cause cracking, even when a die as disclosed in the previous application is used, in which the cavity has a single radius shaped cconcave spherical surface.

Therefore, a die is desired for a self-piercing rivet fastening device that is able to further prevent cracking of fastened members with low malleability when the members are fastened using a self-piercing rivet.

A purpose of the present invention is to provide a die for a self-piercing rivet fastening device which is able to easily fasten members made of a material with low malleability by using a self-piercing rivet so that the members do not crack.

In order to achieve this purpose, the inventors of the present invention discovered that deformation of the lower fastened member can be minimized during fastening and the lower fastened member is less likely to crack when the depth of the cavity in the die is shallow, and the surface of the cavity is a concave surface in the central portion, and a convex surface between the concave surface and an outer peripheral portion. Further improvement can be achieved by providing an additional concave surface in the outer peripheral portion of the cavity, and the convex surface being located between the concave surfaces.

According to the present invention a die for a self-piercing rivet fastening device having a die and a punch is configured so that a self-piercing rivet having a large-diameter head portion and hollow leg portions extending from the head portion is driven into a fastened member placed on top of the die by the punch of the self-piercing rivet fastening device, wherein a cavity is formed in an upper surface of the die to receive a portion of the fastened member protruding due to the self-piercing rivet having been driven in by the punch, the cavity being axially symmetrical relative to the central axis of the die, and a round surface of the central portion of the cavity having a protruding surface between the round surface and the edge portion of the cavity, and wherein the die has a round concave surface in the central portion of the cavity, a convex surface surrounding the outer periphery of the round concave surface of the central portion, and a concave surface in the outer peripheral portion adjacent to the edge portion of the cavity.

The cavity has a round surface in the central portion, and a convex surface surrounding the round surface and positioned between the round surface and the edge portion of the cavity. Because the convex surface of the cavity is positioned below the leg portions of the self-piercing rivet and the cavity is shallow, the portions of the fastened members deformed by the leg portions come into contact with the convex surface, and the deformation can be minimized.

The round surface is preferably a spherical concave surface having a single radius centered on the central axis. The central portion of the cavity is relatively shallow and can receive the deformed portions of the fastened members.

The convex surface is preferably formed by an arc having a trapezoidal, triangular or an upward convex shape in cross-section along the central axis. In this way, the convex surface protrudes sufficiently, and a portion of the convex surface is shallow in the cavity.

When a self-piercing rivet is fastened using a die of the present invention, the fastened members are deformed less than when a die of the prior art is used, and fastened members with low malleability can be fastened with much less cracking. As a result, a die can be provided for a self-piercing rivet fastening device which is able to easily fasten members with low malleability using a self-piercing rivet.

The present invention will become more fully understood from the detailed description and the accompanying drawings, wherein:
FIG. 1 is an enlarged view of the self-piercing rivet fastening portion of a self-piercing rivet fastening device of the prior art.
FIG. 2 is a partially cutaway cross-sectional side view the die in FIG. 1.
FIG. 3 is an enlarged cross-sectional view of the dotted-line portion A of FIG. 2.
FIG. 4 is an enlarged cross-sectional view of the die in a previous application.
FIG. 5 is an enlarged cross-sectional view of the die in the first
   embodiment of the present invention.
FIG. 6 is an enlarged cross-sectional view of a second die, which is not claimed.
FIG. 7 is an enlarged cross-sectional view of a third die, which is not claimed.
FIG. 8 is an enlarged cross-sectional view of a fourth die, which is not claimed.
FIG. 9 is an enlarged cross-sectional view of a fifth die, which is not claimed.
FIG. 10 is a partially cutaway cross-sectional side view of a self-piercing rivet.
FIG. 11 is a cross-sectional view of the cavity portion of the die in the first embodiment.
FIG. 12 is a simulation of the force applied to the fastened members in the middle stage of fastening the fastened members using the die of FIG. 4.
FIG. 13 is a simulation of the force applied to the fastened members in the middle stage of fastening the fastened members using the die in the first embodiment of the present invention.
FIG. 14 is a simulation of the force applied to the fastened members in the middle state as the fastening operation progresses from FIG. 13.
FIG. 15 is a simulation of the force applied to the fastened members as the fastening operation progresses from FIG. 14 and reaches the stage at which the fastening operation has been completed.

The following is an explanation of embodiments of the die for a self-piercing rivet according to the present invention in comparison to a die of the prior art and the die of the previous invention.

FIG. 2 is a partially cutaway cross-sectional side view the die 20 of the prior art used in the self-piercing rivet fastening device 1 in FIG. 1. The die 20 is axially symmetrical with respect to the central axis, and has a round, column-shaped base portion 25, and a column-shaped machined portion 24 having a diameter greater than the base portion 25 above this. The upper portion of the machined portion 24 is made of a hard material such as high-speed tool steel so as to deform the leg portions 12 of the rivet 10. A cavity 21 is formed in the upper surface of the machined portion 24 to deform the leg portions 12 of the self-piercing rivet 10. The material of the self-piercing rivet 10 is a bendable material such as boron steel or chromium-molybdenum steel, and the outer diameter of the leg portions 12 is from 3 to 5.5 mm.

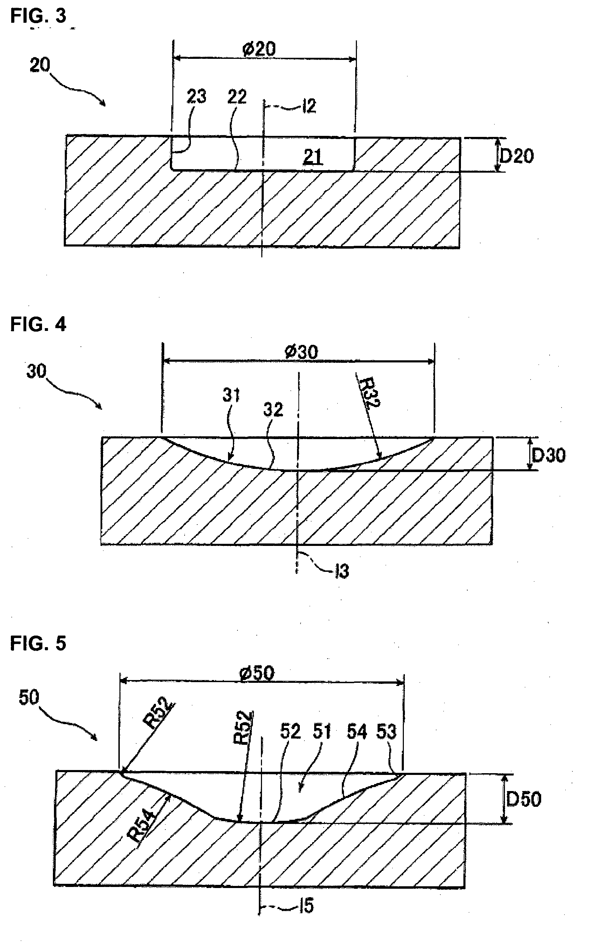

FIG. 3 is an enlarged cross-sectional view of the dotted-line portion A of the machined portion 24 of the prior art die 20 in FIG. 2. The cavity 21 of the die 20 is axially symmetrical with respect to the central axis 12, and has a round flat surface 22 in the central portion, and a substantially cylinder-shaped side surface 23. The diameter of the cavity 21 in the upper surface of the die 20 is ø20, and the depth from the upper surface of the die 20 to the flat surface 22 of the central portion of the cavity 21 is D20.

FIG. 4 is an enlarged cross-sectional view of the portion of the die 30 in the previous application filed by the inventors corresponding to the dotted-line portion A in FIG. 2. The shape of the cavity 31 in the die 30 of the previous application differs from the shape of the cavity 21 of the prior art die 20. In all other respects, it is identical to the die 20 of the prior art shown in FIG. 2, and a self-piercing rivet 10 is driven by a punch 4 into the fastened members 41, 42 placed on top of the die 30. The cavity 31 of the die 30 is axially symmetrical with respect to the central axis 13, and has a concave surface 32 with a single radius R32 centered on the central axis 13. The diameter of the cavity 31 in the upper surface of the die 30 is ø30, and the depth from the upper surface of the die 30 to lowest point in the concave surface of the cavity 31 is D30.

### (1st Embodiment)

FIG. 5 is an enlarged cross-sectional view of the portion of the die 50 in the first embodiment of the present invention corresponding to the dotted-line portion A of FIG. 2. The cavity 51 of the die 50 is axially symmetrical with respect to the central axis 15. The cavity 51, along a cross-sectional plane including the central axis 15, has an arc with radius R52 in the central portion, an arc with radius R52 in the outer peripheral portion coming into contact with the upper surface of the die 50, and an upward convex-shaped arc with radius R54 between the two. In FIG. 5, the arc with radius R52 in the central portion and the arc with radius R52 in the outer peripheral portion are both centered on the central axis 15 and have the same radius. However, radius R52 of the arc in the central portion and radius R52 of the arc in the outer peripheral portion may be different. The center of the arc in the central portion and the center of the arc in the outer peripheral portion may also be different.

As for the three-dimensional shape, the cavity 51 has a concave surface 52, which is a concave spherical surface in the central portion, and a concave surface 53, which is a concave spherical surface in the outer peripheral portion in contact with the upper surface of the die 50. It also has a convex surface 54 between the concave surface 52 in the central portion and the concave surface 53 in the outer peripheral portion. In other words, the convex surface 54 surrounds the concave surface 52 in the central portion, and the concave surface 53 surrounds the convex surface 54. The convex surface 54 is the portion between the concave surface 52 of the central portion and the concave surface 53 of the outer peripheral portion, and the portion with the convex surface 54 has a shallow depth in the cavity 51. The diameter of the cavity 51 in the upper surface of the die 50 is ø50, the depth from the upper surface of the die 50 to lowest point in the concave surface of the cavity 51 is D50, the radius of the concave surfaces 52, 53 is R52, and the radius of the convex surface 54 is R54.

When the upper and lower fastened members 41, 42 are fastened using the die 20 of the prior art and a self-piercing rivet 10, the lower fastened member 42 experiences significant deformation and strong tensile stress immediately after the upper fastened member 41 is pierced, and cracking is likely to occur. The portion of the lower fastened member 42 directly below the spot at which the upper fastened member 41 is pierced by the leg portions 12 of the rivet experiences significant deformation and is likely to become cracked. In the first embodiment of the present invention, the cavity 51 has a convex surface 54 directly below the spot at which the upper fastened member 41 is pierced by the leg portions 12 of the rivet. During the fastening process, the lower fastened member 42 comes into contact with the convex surface 54 before significant deformation has occurred. The lower fastened member 42 is not significantly deformed, and strong tensile stress does not occur. As a result, the lower fastened member 42 is unlikely to crack.

### (2nd non-claimed Embodiment)

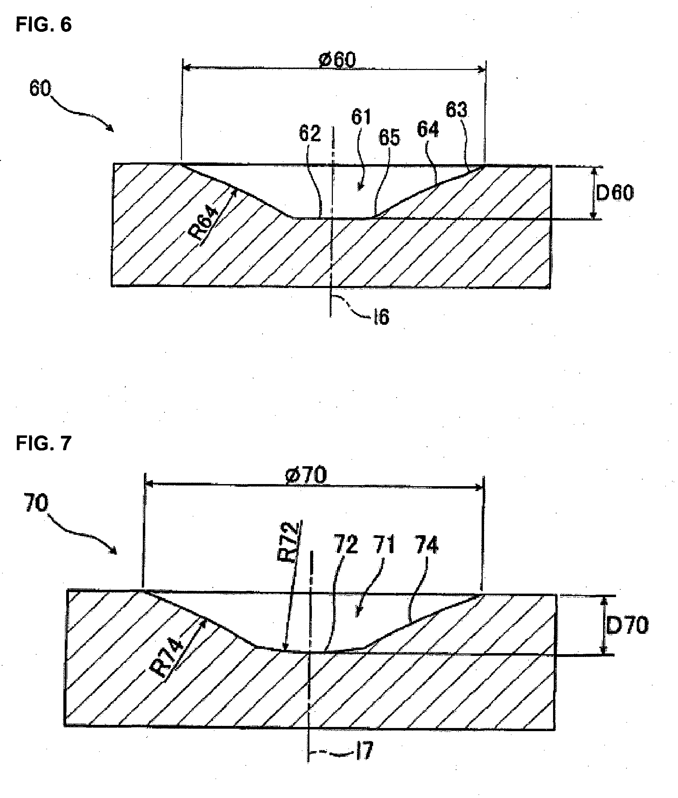

FIG. 6 is an enlarged cross-sectional view of the portion of the die 60 according to a second non-claimed embodiment that corresponds to the dotted-line portion A in FIG. 2. The cavity 61 of the die 60 is axially symmetrical relative to the central axis 16. The cavity 61, along a cross-sectional plane including the central axis 16, has a straight line in the central portion, an inclined straight line contiguous with the straight line in the central portion, an inclined straight line in the outer peripheral portion making contact with the upper surface of the die 50, and an upward convex arc with radius R64 between the two inclined straight lines. In FIG. 6, the two straight lines are on the same line. However, the two straight lines do not have to be on the same line.

The cavity 61 consists of a round flat surface 62 in the central portion, an inclined surface 65 surrounding the round flat surface 62, an inclined surface 63 in the outer peripheral portion in contact with the upper surface of the die 60, and a convex surface 64 between the inclined surface 65 and the inclined surface 63 in the outer peripheral portion. The inclined surface 65, the inclined surface 65 surrounding the round flat surface 62, and the inclined surface 63 in the outer peripheral portion have a bowl shape. The diameter of the cavity 61 at the upper surface of the die 60 is ø60, the depth from the upper surface of the die 60 to the flat surface 62 in the central portion of the cavity 61 is D60, and the radius of the convex surface 64 is R64. In this embodiment, the central portion of the cavity 61 is the flat surface 62, the outer periphery of the flat surface 62 is inclined surface 65, and the outer peripheral portion is inclined surface 63. The shape of the convex surface 64 is the same as that of the convex surface 54 in the first embodiment. Because the lower fastened member 42 comes into contact with the convex surface 64 before significant deformation has occurred, the deformation is minimized. As a result, the effects are similar to those of the die 50 in the first embodiment.

### (3rd non-claimed Embodiment)

FIG. 7 is an enlarged cross-sectional view of the portion of the die 70 according to a third non-claimed embodiment that corresponds to the dotted-line portion A in FIG. 2. The cavity 71 of the die 70 is axially symmetrical relative to the central axis 17. The cavity 71, along a cross-sectional plane including the central axis 17, has an arc in the central portion with radius R72, and an upward convex shaped arc with radius R74 between the ends and the upper surface of the die 70. The cavity 71 consists of a spherical concave surface 72 in the central portion, and a convex surface 74 between the concave surface 72 in the central portion and the upper surface of the cavity 70. The diameter of the cavity 71 at the upper surface of the die 70 is ø70, the depth from the upper surface of the die 70 to lowest point in the concave surface of the cavity 71 is D70, and the radius of the convex surface 74 is R74. Compared to the first embodiment, this embodiment does not have a concave portion 53 in the outer peripheral portion but has a has a convex surface 74. As in the case of the first embodiment, the convex surface 74 comes into contact with the lower fastened member 42, resulting in the same effects as those of the die 50 in the first embodiment.

### (4th non-claimed Embodiment)

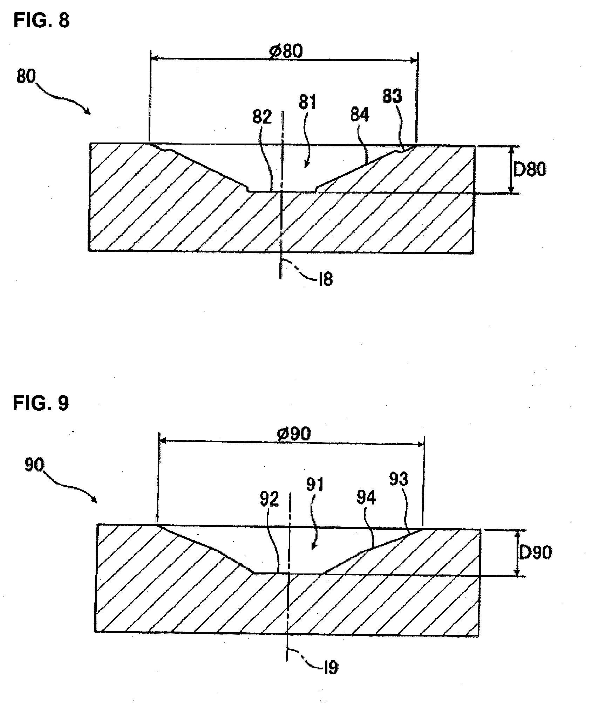

FIG. 8 is an enlarged cross-sectional view of the portion of the die 80 according to a fourth non-claimed embodiment that corresponds to the dotted-line portion A in FIG. 2. The cavity 81 of the die 80 is axially symmetrical relative to the central axis 18. The cavity 81, along a cross-sectional plane including the central axis 18, has a straight line in the central portion, a straight line in contact with the upper surface of the die 80, and a straight line contiguous with the straight line in the central portion and the straight line in contact with the upper surface of the die 80. These three lines form a trapezoid-shaped portion.

The cavity 81 has a round flat surface 82 in the central portion, an inclined surface 83 in the outer peripheral portion in contact with the upper surface of the die 80, and a surface between the flat surface 82 in the central portion and the inclined surface 83. These three surfaces form trapezoidal portion 84. The inclined surface 83 in the outer peripheral portion is bowl-shaped. The diameter of the cavity 81 at the upper surface of the die 80 is ø80. The depth from the upper surface of the die 80 to the flat surface 82 in the central portion of the cavity 81 is D80. Compared to the second embodiment shown in FIG. 6, this embodiment has a trapezoidal portion 84 instead of the convex surface 64 in the die 60 of the second embodiment. The trapezoidal portion 84 comes into contact with the lower fastened member 42, resulting in the same effects as those of the second embodiment. In FIG. 8, the flat surface 82 in the central portion is contiguous with the trapezoidal portion 84, but an inclined surface such as inclined surface 65 in FIG. 6 can be provided between the flat surface 82 in the central portion 82 and the trapezoidal portion 84.

### (5th non-claimed Embodiment)

FIG. 9 is an enlarged cross-sectional view of the portion of the die 90 according to a fifth non-claimed embodiment that corresponds to the dotted-line portion A in FIG. 2. The cavity 91 of the die 90 is axially symmetrical relative to the central axis 19. The cavity 91, along a cross-sectional plane including the central axis 19, has a straight line in the central portion, a straight line in contact with the upper surface of the die 90, and two straight lines contiguous with the straight line in the central portion and the straight line in contact with the upper surface of the die 90. These lines form a triangle-shaped portion.

The cavity 91 has a round flat surface 92 in the central portion, an inclined surface 93 in the outer peripheral portion in contact with the upper surface of the die 90, and two surfaces between the two. These surfaces form triangular portion 94. The inclined surface 93 in the outer peripheral portion is bowl-shaped. The diameter of the cavity 91 at the upper surface of the die 90 is ø90, and the depth from the upper surface of the die 90 to the flat surface 92 in the central portion of the cavity 91 is D90. Compared to the fourth embodiment, this embodiment has a triangular portion 94 instead of the trapezoidal portion 84 in the die 80 of the fourth embodiment. The triangular portion 94 comes into contact with the lower fastened member 42, resulting in the same effects as those of the fourth embodiment.

### [Examples]

### (Simulation of Stress Applied to Fastened Members)

A simulation was performed using a die 30 having a cavity 31 in which the concave surface 32 of the previous application was formed with a single radius R (FIG. 4), and a die 50 having the convex surface 54 of the first embodiment of the present invention (FIG. 5). In this simulation, fastened members 41, 42 were fastened together using a self-piercing rivet 10, and the force applied to the fastened members 41, 42 was determined using the finite element method. A test was also performed in which fastened members 41, 42 were actually fastened together.

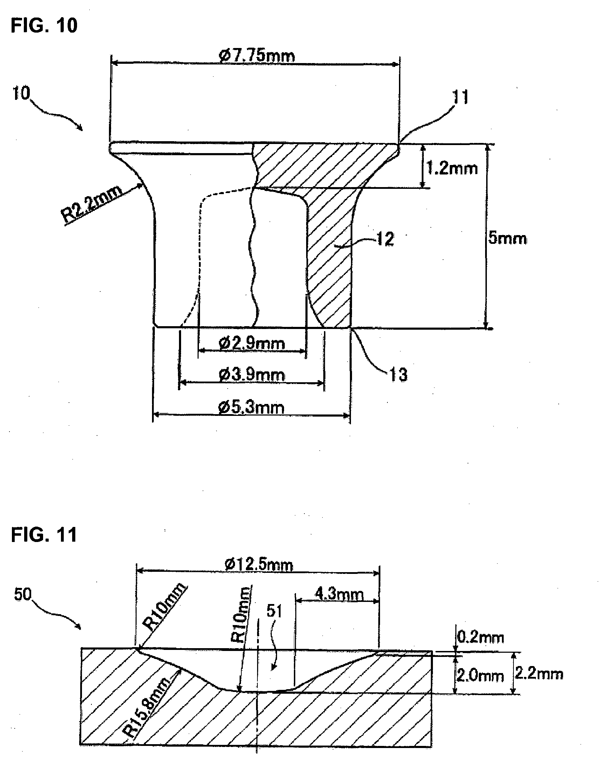

FIG. 10 is a partially cutaway cross-sectional side view of the self-piercing rivet 10 used in the simulation. The outer diameter of the head portion of the rivet is 7.75 mm, the outer diameter of the leg portions 12 is 5.3 mm, and the height of the rivet is 5.0 mm.

FIG. 11 is a cross-sectional view of the cavity 51 portion of the die 50 in the first embodiment. The diameter ø50 of the cavity 51 is 12.5 mm, and the depth D50 is 2.2 mm. The diameter ø50 if the cavity 51 of the die 50 is larger than the outer diameter of the leg portions 12 of the self-piercing rivet by at least 7 mm. In the examples, the outer diameter of the leg portions 12 of the self-piercing rivets 10 is 5.3 mm, and the diameter ø50 of the cavity 51 is 12.5 mm. When the diameter ø50 of the cavity 51 is too small, it becomes difficult for the leg portions 12 of the self-piercing rivet 10 to expand inside the cavity 51. When the diameter ø50 of the cavity is too great, the surrounding portion of the fastened members 41, 42 cannot support the punched in self-piercing rivet 10, and it becomes difficult to fasten the members together.

Here, the self-piercing rivet 10 shown in FIG. 10 is used to fasten together a mild steel sheet (SCGA270-45, sheet thickness: 0.65 mm) serving as the upper fastened member 41, and an aluminum die-cast sheet (sheet thickness: 2.4 mm) serving as the lower fastened member 42.

### (Previous Application Simulation)

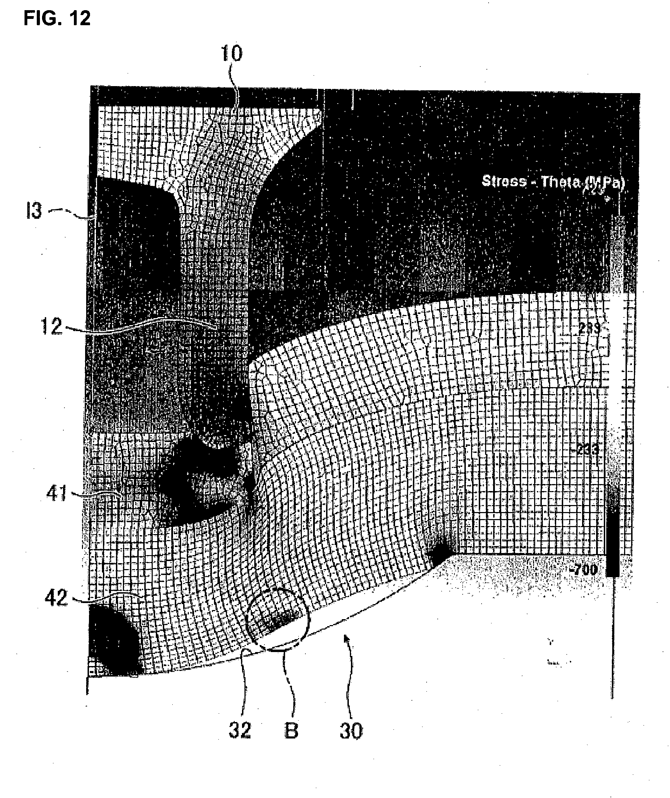

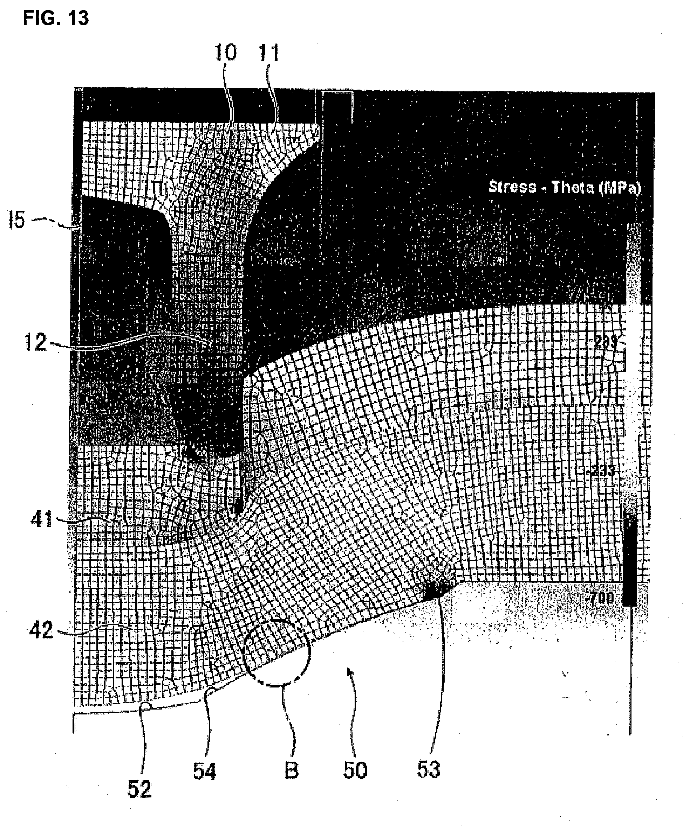

FIG. 12 shows the results of a simulation of the force applied to the fastened members 41, 42 when the fastened members 41, 42 are fastened together using the die 30 of the previous application (FIG. 4). FIG. 13 through FIG. 15 show the results of a simulation in which the fastened members 41, 42 were fastened together using the die 50 of the first embodiment. The dark-colored portions indicate high stress.

FIG. 12 is a cross-sectional simulation of the middle stage of the process when fastened members 41, 42 have been placed on top of the die 30 in FIG. 4 and the fastened members 41, 42 are being fastened using a self-piercing rivet 10. FIG. 12 is a cross-section of the right side of the central axis 13. The left side is symmetrical with the right side relative to the central axis 13. The die 30 has a cavity 31 formed with a concave surface 32 having a single radius R. The fastened members 41, 42 are set on top of the die 30, the outer periphery of the fastened portion is pushed in by the nose (not shown), and the leg portion tips 13 of the self-piercing rivet 10 make contact with the surface of fastened member 41. When the self-piercing rivet 10 is driven into the member by the punch 4, the leg portions 12 pierce the upper fastened member 41 and begin to become elastically deformed inside the lower fastened member 42. The fastened member 42 protrudes downward, and the protruding portion is received inside the cavity 31 of the die 30. The leg portions 12 of the self-piercing rivet 10 deforms downwardly a portion of the fastened member 42 below the leg portions 12 (the portion indicated by B), and the stress increases. However, there is still space between the concave surface 32 of the die 30. When the leg portions 12 are pushed down further into the fastened members 41, 42, even higher stress occurs in portion B, and cracking may occur in the fastened member 42.

### (Simulation of 1st Embodiment)

FIG. 13 through FIG. 15 show the results of a simulation using the die 50 in the first embodiment of the present invention to fasten together the fastened members 41, 42. FIG. 13 is a cross-section of the right side of the central axis 15. The left side is symmetrical with the right side relative to the central axis 15. FIG. 13 is an expanded cross-sectional view showing a self-piercing rivet 10 driven into the fastened members 41, 42 using die 50 immediately before the lower fastened member 42 being fastened makes contact with the convex surface 54 of the cavity 51. This drawing shows the stage at which the self-piercing rivet 10 has been driven into the fastened members to the same distance as that shown in FIG. 12.

When the self-piercing rivet 10 has been driven in by the punch 4, the leg portions 12 pierce the upper fastened member 41 and become elastically deformed inside the lower fastened member 42 due to the punch 4. The leg portions 12 pierce fastened member 41, and cause fastened member 42 to protrude downwards. The protruding portion of the fastened member 42 is received inside the cavity 51 of the die 50, and the lower surface of fastened member 42 below the leg portions 12 is deformed downward. The amount of deformation in the portion of the fastened member 42 indicated by B is still small and the stress is not very high. FIG. 13 shows the stage at which the self-piercing rivet 10 has been driven into the same distance as FIG. 12. In FIG. 12, there is still space between portion B and the concave surface 32 of the cavity 31. In FIG. 13, the die 50 in the first embodiment of the present invention is used, and portion B is just about to make contact with the convex surface 54 of the cavity 51. Here, there is no space between the portion and the convex surface 54.

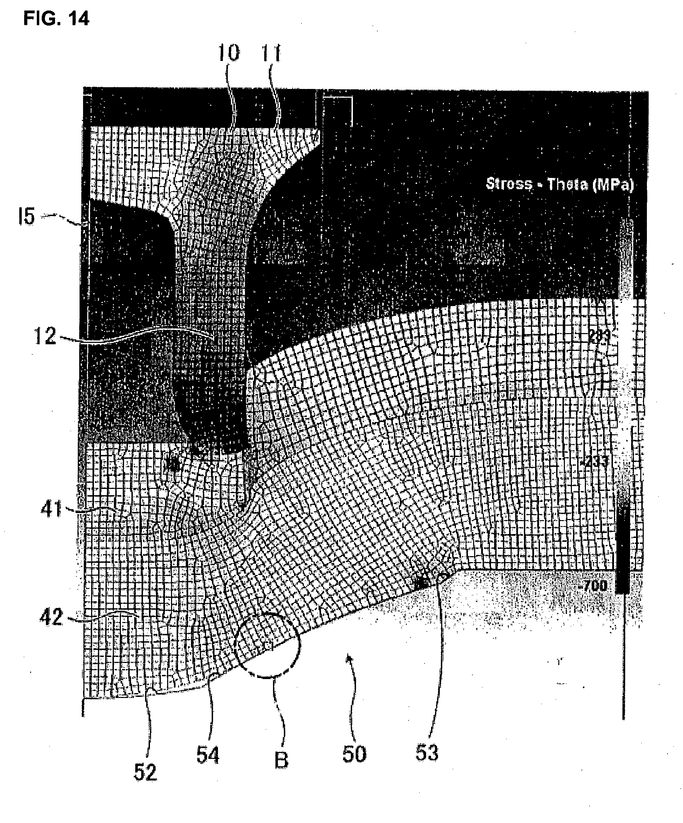

FIG. 14 shows the stage at which the fastening operation has proceeded shortly after FIG. 13. Here, the portion of the fastened member 42 indicated by B has made contact with the convex surface 54 of the cavity 51, and no longer becomes deformed downward. As a result, the stress in the portion indicated by B is not very high.

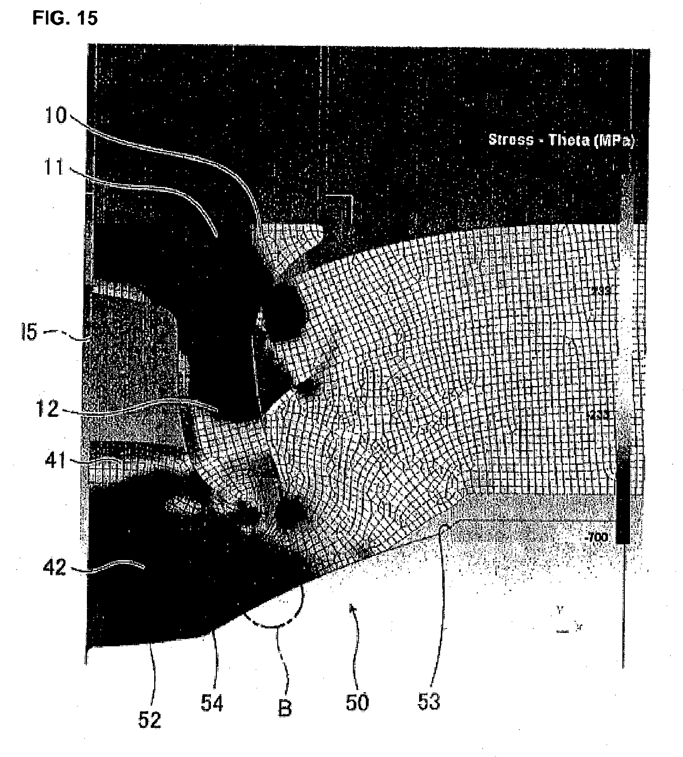

FIG. 15 shows the stage at which the fastening operation has been completed. The fastened member 42 has come into contact with both the convex surface 54 and concave surface 52 of the cavity 51, and the fastened member 42 can no longer move vertically. While the leg portions 12 of the self-piercing rivet 10 push outward radially inside the fastened member 42, they become deformed so as to expand outward radially. The leg portion tips 13 do not pierce the lower fastened portion 42 near the die 50, but remain inside. The fastened members 41, 42 are fastened together by the head portion 11 and the leg portions 12 expanded inside the fastened member 42.

In the die 50 according to the first embodiment of the present invention, the cavity 51 consists of a concave surface 52, another concave surface 53, and a convex surface 54, and these three surfaces are smooth and continuous. The convex surface 54 is formed so the cavity 51 becomes shallower below the portion where the leg portions 12 of the rivet 10 bite into the fastened member 42. As a result, the amount of deformation of the portion of the fastened member 42 indicated by B is small. This makes cracking less likely to occur. The boundary portion between the upper surface of the die 50 and the cavity 51 has an obtuse angle. This makes cracking less likely to occur in the portion of the fastened member 42 that makes contact with the boundary portion between the upper surface of the die 50 and the cavity 51. A test was performed in which fastened members 41, 42 were fastened using a die 50 according to the first embodiment of the present invention. In the results of the simulation, the fastened members 41, 42 were not cracked after the fastened members 41, 42 had been fastened.

When the dies 60, 70, 80, 90 according to the non-claimed second through fifth embodiments were used, cracking did not occur in the lower fastened member 42 because a convex surface 64, 74, trapezoidal portion 84 or triangular portion 94 were formed to make the cavity 61, 71, 81, 91 shallower below the portion where the leg portions 12 of the rivet 10 bite into the fastened member 42.

When a die according to an embodiment of the present invention is used to fasten aluminum die-cast members with low malleability together using a self-piercing rivet, the amount of deformation in the fastened members can be reduced, and cracking is less likely to occur in the fastened members.

## Claims

1. A die for a self-piercing rivet fastening device (1) having a die (50) and a punch (4) and being configured so that the punch (4) can drive a self-piercing rivet (10) having a large-diameter head portion (11) and hollow leg portions (12) extending from the head portion (11) into a fastened member (41, 42) placed on top of the die, the die (50) comprising a cavity (51) formed in an upper surface of the die (50) to receive a portion of the fastened member (41, 42) protruding due to the self-piercing rivet (10) having been driven into the fastened member (41, 42) by the punch (4), wherein the cavity (51) is axially symmetrical relative to the central axis of the die (50), and has a round surface (52) in the central portion of the cavity and a protruding surface (54) between the round surface and the edge portion of the cavity, **characterized in that**:
- said round surface (52) in the central portion of the cavity (51) is a concave surface (52) of said cavity;
- said protruding surface (54) is a convex surface (54) surrounding the outer periphery of the round concave surface (52) of the central portion; and
- a concave surface (53) is also provided in the outer peripheral portion adjacent to the edge portion of the cavity (51) surrounding the convex surface (54).

2. A die according to claim 1, wherein the round surface (52) is a spherical concave surface having a single radius (R52) centered on the central axis.

3. A die according to claim 1 or claim 2, wherein the protruding surface (54) is formed by an arc having a trapezoidal, triangular or an upward convex shape in cross-section along the central axis.

4. A die according to anyone of claims 1 to 3, wherein the surface (53) in the outer peripheral portion is an arc having a downward concave shape in cross-section along the central axis.

5. A die according to claim 4, wherein the surface (53) in the outer peripheral portion is a concave surface having a single radius (R52) centered on the central axis.

## Patentansprüche

1. Matrize für eine Vorrichtung (1) zum Setzen von Stanznieten, die eine Matrize (50) und einen Stempel (4) aufweist und so ausgestaltet ist, dass der Stempel (4) einen Stanzniet (10) mit einem Kopfteil (11) erweiterten Durchmessers und mit sich von dem Kopfteil (11) erstreckenden hohlen Fußteilen (12) in ein auf die Oberseite der Matrize gelegtes Fügeteil (41, 42) hineintreiben kann, wobei die Matrize (50) einen in einer Oberfläche der Matrize (50) ausgebildeten Hohlraum (51) umfasst, um einen Abschnitt des Fügeteils (41, 42) aufzunehmen, der aufgrund des von dem Stempel (4) in das Fügeteil (41, 42) hineingetriebenen Stanzniets (10) herausragt, wobei der Hohlraum (51) zur Mittelachse der Matrize (50) rotationssymmetrisch ausgebildet ist und in dem mittleren Abschnitt des Hohlraums eine runde Fläche (52) und zwischen der runden Fläche und dem Randabschnitt des Hohlraums eine vorspringende Fläche (54) aufweist, **dadurch gekennzeichnet, dass** die runde Fläche (52) in dem mittleren Abschnitt des Hohlraums (51) eine konkave Fläche (52) des Hohlraums darstellt;
die vorspringende Fläche (54) eine konvexe Fläche (54) darstellt, die den Außenumfang der runden konkaven Fläche (52) des mittleren Abschnitts umgibt; und
eine weitere konkave Fläche (53) in dem äußeren Umfangsabschnitt angrenzend an den Randabschnitt des Hohlraums (51) vorgesehen ist, die die konvexe Fläche (54) umgibt.

2. Matrize nach Anspruch 1, wobei die runde Fläche (52) eine kugelförmige konkave Fläche mit einem auf die Mittelachse zentrierten Radius (R52) ist.

3. Matrize nach Anspruch 1 oder Anspruch 2, wobei die vorspringende Fläche (54) von einem Bogen gebildet ist, der im Cluerschnitt entlang der Mittelachse eine trapezförmige, dreiecksförmige oder eine nach oben konvexe Form aufweist.

4. Matrize nach einem der Ansprüchen 1 bis 3, wobei die Fläche (53) in dem äußeren Umfangsabschnitt einen Bogen darstellt, der im Querschnitt entlang der Mittelachse eine nach unten konkave Form aufweist.

5. Matrize nach Anspruch 4, wobei die Fläche (53) in dem äußerten Umfangsabschnitt eine konkave Fläche mit einem auf die Mittelachse zentrierten Radius (R52) darstellt.

## Revendications

1. Matrice d'un dispositif de fixation à rivet autoperforant (1) qui présente une matrice (50) et un poinçon (4), et qui est configurée de telle sorte que le poinçon (4) puisse entraîner un rivet autoperforant (10), qui présente une partie tête de grand diamètre (11) et des parties jambes creuses (12) qui s'étendent à partir de la partie tête (11), dans un élément fixé (41, 42) placé en haut de la matrice, la matrice (50) comprenant une cavité (51) formée dans une surface supérieure de la matrice (50) de façon à recevoir une partie de l'élément fixé (41, 42) qui fait saillie du fait que le rivet autoperforant(10) a été entraîné dans l'élément fixé (41, 42) par le poinçon (4), dans laquelle la cavité (51) est symétrique de manière axiale par rapport à l'axe central de la matrice (50), et présente une surface ronde (52) dans la partie centrale de la cavité et une surface qui fait saillie (54) située entre la surface ronde et la partie bord de la cavité, **caractérisée en ce que** :
ladite surface ronde (52) dans la partie centrale de la cavité (51) est une surface concave (52) de ladite cavité ;
ladite surface qui fait saillie (54) est une surface convexe (54) qui entoure la périphérie extérieure de la surface concave ronde (52) de la partie centrale ; et
une surface concave (53) est également prévue dans la partie périphérique extérieure adjacente à la partie bord de la cavité (51) qui entoure la surface convexe (54).

2. Matrice selon la revendication 1, dans laquelle la surface ronde (52) est une surface concave sphérique qui présente un seul rayon (R52), centrée sur l'axe central.

3. Matrice selon la revendication 1 ou la revendication 2, dans laquelle la surface qui fait saillie (54) est formée par un arc qui présente une section transversale de forme trapézoïdale, triangulaire ou convexe vers le haut le long de l'axe central.

4. Matrice selon l'une quelconque des revendications 1 à 3, dans laquelle la surface (53) dans la partie périphérique extérieure, est un arc qui présente une section transversale de forme concave vers le bas le long de l'axe central.

5. Matrice selon la revendication 4, dans laquelle la surface (53) dans la partie périphérique extérieure est une surface concave qui présente un seul rayon (R52), centrée sur l'axe central.
